# EUROPEAN PATENT APPLICATION

(11) **EP 4 420 502 A1**
(43) Date of publication of application: **28.08.2024**
(21) Application number: 22883032.9
(22) Date of filing: 24.10.2022
(51) Int. Cl.: A01C 11/00, A01G 31/02, A01G 9/02, A01G 9/12, A01C 1/04, A01G 33/00

(54) **DEVICE FOR ATTACHING PLANTS TO THE BOTTOM OF A BODY OF WATER**

(30) Priority: 24.10.2021 ES 202132079 U
(71) Applicant: Andarias García, José Vicente, 13500 Puertollano (Ciudad Real) (ES)
(72) Inventor: Andarias García, José Vicente, 13500 Puertollano (Ciudad Real) (ES)
(74) Representative: De Castro Hermida, José Luis
(86) International application number: PCT/ES2022/070689
(87) International publication number: WO 2023/067232

(57) **Abstract**

Disclosed is a device for attaching plants to the bottom of a body of water, which retains the plant and attaches it to the substrate of the bottom of an aquatic system. The attachment device comprises a support (3) designed to sit on the bottom of the body of water and, optionally, to be buried in the waterbed, and at least one plant-retaining device (I) designed to be disposed around the stem of the plant, such that the stem is surrounded by the retaining device (I), the retaining device comprising a connection system (2) for connecting the retaining device (I) to the support (3). According to the invention, the support (3) comprises one or more layers of a ferromagnetic element, and the system for connecting the retaining device ( I) comprises one or more layers of a ferromagnetic element, such that the retaining device (I) can be attached anywhere on the support (3). Preferably, the support (3) comprises multiple through- holes (5), and the retaining device (1) for retaining the plant or seed passes through at least one of the through-holes (5) of the support (3), such that the part of the retaining device (1) that protrudes through the bottom of the support (3) is fastened to the bottom of the body of water and prevents the support (3) comprising the one or more plant- or seed-retaining devices (1) from being dragged by the current.

## Description

### OBJECT OF THE INVENTION

The invention, as expressed by the statement of this descriptive report, refers to a device for fastening plants to the bottom of a body of water that provides, to the function for which it is intended, advantages and features, which are described in more detail hereafter, which represent an improvement on the current state of the art.

The object of the present invention lies in a attachment accessory that is intended to allow newly transplanted plants or seeds to remain in their position in the substrate of a bottom of a body of water and to be able to root in a natural manner, which, being of those comprising a support, preferably with multiple through-holes, and one or more plant- or seed-retaining devices that are magnetically attached to the support, preferably through at least one of its holes or to prevent the plant or seed from being dragged by the current, it presents a series of improvements that represent an improvement that provides advantages over what is currently known, especially with regards to the fastening of the support and, consequently, of the entire assembly of the fastening device to the bottom of a body of water to prevent it from moving or being carried away by the current.

### FIELD OF APPLICATION OF THE INVENTION

The field of application of the present invention is framed within the technical field of the farming and fishing industry, the fishkeeping industry and other aquatic environments, focusing particularly on fastening systems for natural plants, artificial plants, seeds or ornamental elements such as cables or light bulbs, at the bottom of any aquatic environment, whether aquariums, artificial ponds, rivers or sea.

### BACKGROUND OF THE INVENTION

Currently, some systems and devices for attaching plants to the bottom of a body of water are already known in the state of the art.

Thus, by CN210043001U a device for attaching plants to the bottom of a body of water comprising an orifice support with two different and defined uses to which one or more retaining devices and others intended to collect feces by suction are threaded, is disclosed. However, unlike the attachment device of the invention, this device for attaching plants does not allow complete occupation of the surface and since the holes are limited in space and quantity, the support bears limiting preset and defined positions with regards to the design of the aquarium and plant layout. Additionally that by being buried in the bottom, the sand and gravel at the bottom cover the holes, with the subsequent difficulty of adding new retainers and plants, since they must be carefully cleaned for the threads to operate and do not crack, which stirs up the toxic nitrites at the bottom, poisoning the water and the fish, which can force the user to install everything a priori, making subsequent design changes difficult, nor does it allow the plant retaining devices themselves to be the ones that offer resistance to the sea current and prevent the device for attaching plants from being dragged.

KR101990794B1 describes a device for attaching plants to the seabed comprising at least one retaining device, formed by tubes, configured to be arranged around the stem of the plant whose lower end is attached, for example, by thread, to a support with holes. However, the support is not laminar and, furthermore, the holes are not through but rather hollow-shaped. It does not have through-holes, all of which makes the support described in this document not to adapt correctly to the surface of the seabed and does not allow the plants attached to the support to take root and take their nutrients from the sea floor, thus limiting their growth. Furthermore, its installation is limited to heavy concrete blocks of expensive installation with heavy machinery and manufacture that leave an artificial footprint on the aquatic environment that they visually transform, factors which are several of the main objectives of the present invention.

And JP2008148575A describes a device for attaching plants to the bottoms of bodies of water comprising a support mesh with legs where the stems of the plants are located and a pressure mesh that is placed on the plants to keep them pressed, in addition to requiring an adhesive to manually and individually secure the leaves. In this case, it is therefore a very different solution than the attachment device proposed by the present invention.

It does not appear, therefore, that any of the aforementioned patents or inventions, taken separately or in combination, describe an attachment device such as the one claimed here and whose essential objective is to provide a new device for attaching plants to the seabed that provides advantages thanks to various improved structural aspects, especially intended to increase both the retention of the plant or seed by the retaining device as well as the support, preventing them from being dragged by the current, the ease of installation and flexibility as to the design of aquatic environments, as well as the protection of the most vulnerable parts of the plants.

### DISCLOSURE OF THE INVENTION

The device for attaching plants to the bottom of a body of water that the invention proposes is configured as the ideal solution for the aforementioned objective, with the characterizing details that make it possible and that distinguish it conveniently included in the final claims that accompany the present description.

Specifically, what the invention proposes, as noted above, is a device for attaching plants to the bottom of a body of water that comprises in a known manner a support configured to sit on the bottom of a body of water and optionally be buried in the waterbed, and at least one plant retaining device configured to be arranged around the stem of the plant causing the stem of the plant to be surrounded by the retaining device, comprising an attachment system of said retaining device with the support.

And from said configuration, the attachment device object of the present invention is essentially distinguished, the support and the system for connecting the retaining device comprise one or several layers of a ferromagnetic element in such a way that it is possible to affix the retaining device anywhere on the surface of the support.

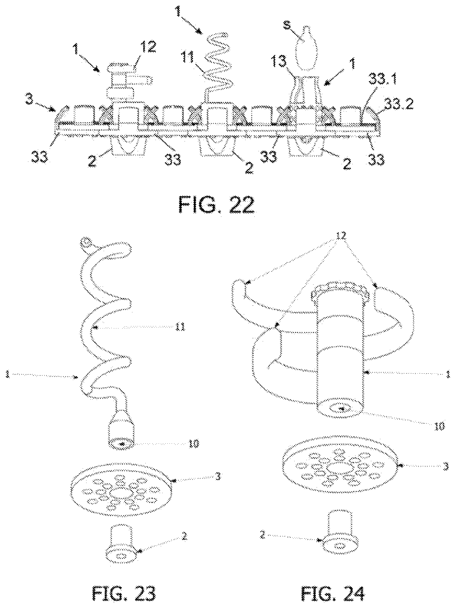

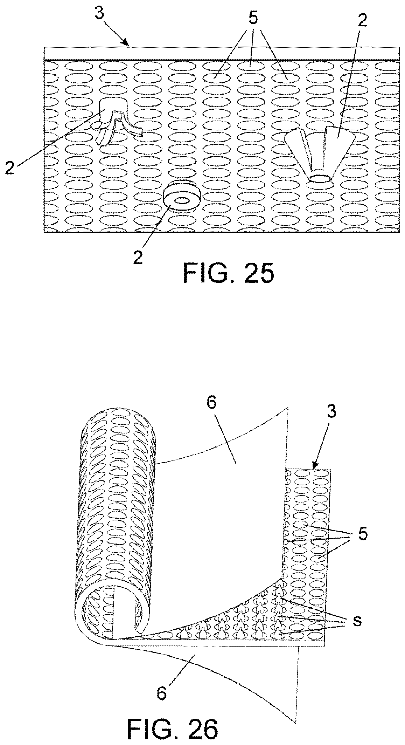

In a preferred embodiment, the support comprises multiple through-holes, and the plant- or seed-retaining device passes through at least one of the through-holes of the support in such a way that the part of the retaining device that protrudes through the bottom of the support digs into the bottom of the body of water and makes it difficult for the support with the one or more plant- or seed-retaining devices to be dragged by the current. In figures 22 and 25, said part of the attachment system can be seen protruding through the bottom of the support. Furthermore, in this embodiment the roots of the plants or seeds contained in the retaining device may traverse the support and access the substrate of the bottom of a body of water through the through-holes of the support.

In one embodiment, the sheet-shaped support is a laminar body for seating on the bottom and can adapt to the shape thereof, either on the substrate or buried therein, largely adopting the orography of the bottom.

In another embodiment, it is formed by joining a plurality of pieces joined together so that they are arranged in a coplanar manner and define the through-holes of the sheet-shaped support, which is one of its most notable features of its design to conform to the bottom like a glove, as the pieces forming the support are rings that are joined together by attachment elements which, in addition, act as connectors and as a fixing means to the bottom of the support, thereby defining cavities at the upper part thereof in order for the sand from the bottom of the body of water to be positioned inside and increase the weight of the assembly, thus making it difficult for the attachment device to be dragged by the current.

Furthermore, optionally, the attachment elements or connectors of the rings that define the support may include claws at the bottom, in order to provide fastening of the support to the sea bottom.

Optionally, in one embodiment of the invention, the support parts are rings that are joined together by simple joining elements, which do not cover the space therebetween, i.e., consisting of a type of washers that, in addition to adaptation to the terrain, in the case of large-scale and industrial repopulation is launched from ships, allowing the plants of the waterbed or bottom of a body of water not to be crushed and also, they can grow through them.

Preferably, the connecting elements are parts whose structure comprises both features at the same time, that is, a housing for the sand that increases the weight of the support and claws to increase fixation.

Finally, in another embodiment option, the parts forming the support are connectors that are joined together directly with the through-holes defined by the intersection areas between them. Preferably, said parts are the previously described parts whose structure includes both a housing for retaining sand and fastening claws, allowing their installation with said claws and said housing facing up or down or even combining both positions.

In any case, the laminar support, whether formed by a flat body or a set of parts or rings, can be cut out and/or modular, to give it the shape and dimension desired in each case, allowing it to adapt to the size and space that the bottom of the body of water has and the design desired to make in it and of the site to be repopulated, where any type of drawing or mosaic can be made, either through sonar or GPS maps as it would be in marine cases, or manually to decorate small spaces with plants, even helping with lighting if desired, since the system allows to quickly attach or remove a multitude of elements such as cables or underwater lights.

Optionally, the support comprises one or more fasteners configured to secure it to the bottom of the body of water, which for example may consist of anchoring legs or suction cups, depending on the type of water bottom in which the attachment device is installed and without the need to release "a dead body", which is what is known as a large stone that is launched to the bottom as ballast and to dock ships.

Moreover, the system for securing the plant- or seed-retaining device to the support, as well as the device itself, preferably, have an internal through-hole to allow the plant or seed roots, before and after germinating to be retained in said device, accessing the bottom of the body of water through the same through-hole of the support where the retaining device has been attached, in addition to creating a kind of shield that prevents natural predators from accessing part or all of the planted individual, protecting it from bites and increasing its likelihood of life success.

In cases where the needs or conditions are difficult or extreme due to currents or when the device is semi-buried, the attachment system of the retaining device with the support, in one embodiment, the magnetic-mechanical retention that self-guides by polarity attraction the axes of the components with the plate holes, the strength of the connection may be assisted by pressure from the top of the support, i.e., by being formed of an annular body, where the retaining device is fitted or integrated, and from which radial lugs emerge, internally, with or without claws, which are inserted under pressure into the through-holes of the support.

Optionally, the attachment system has reinforced elastic elements with magnetic properties that, in addition to, for example, in the form of inverted flanges or in the form of a harpoon, which prevent, once inserted into one of the through-holes of the support from being separated from it.

In another embodiment, the attachment system of the retaining device with the support, instead of being attached on top, is an independent part of the retaining device that is placed on the lower part of the support and is attached to the retaining device through the through-hole in the support in which said device is inserted.

Optionally, the attachment system that is placed on the lower part of the support is a magnet or a ferromagnetic part that is affixed to the lower part of the retaining device which, in turn, comprises a magnet or a ferromagnetic element, such that both elements are joined together by magnetic union through the through-hole of the support.

As for the retaining device, it may have different configurations, depending on the type of plant or seed for which it is intended, as if it were some other object that is desired to be affixed.

Thus, in one embodiment option, the retaining device comprises a helical shape, which is arranged around the stem of the plant, causing the coils of the helicoid to pass repeatedly and radially surrounding it, until the stem of the plant is in its interior longitudinally.

In another embodiment option, the retaining device comprises a plurality of collapsible arms relative to an axis to which they are connected, which are independent and configured to rotate longitudinally relative to their axis and radially relative to the plant, thereby abrading the stems and adapting to their diameter.

And, in another embodiment option, the retaining device comprises a set of converging members that emerge radially above a circular body, optionally a cylinder, said case being especially intended for seed retention.

The retaining device can also optionally have a ground or perforated base to retain the seed and which does not pass therethrough and into the bottom of the support but that its roots, upon germination, can pass through.

Furthermore, in such an embodiment, the retaining device may consist of a tubular body with orifice walls to facilitate passage of water and nutrients.

In any event, preferably, the retaining device and its attachment system to the support are integrated into the same element, except for the case in which the attachment system is positioned on the lower portion of the support.

It should be noted that, preferably, all the elements from which the attachment device is formed are of biodegradable material, although this does not assume a limitation, since they can also be made, all or some, of durable material. In any case, in a preferred embodiment, said material, when the attachment device is intended for the bottom of the body of water of hot water aquariums or tropical environments, is Nitinol.

Optionally, the plant attachment device is configured to comprise a plurality of modules, composed of a support with the retaining devices attached by means of respective connection systems, attached to one another.

Finally, in one embodiment option, at least part of the through-holes of the support are plugged with a biodegradable or water-soluble sheet, such that it disappears after a while, being intended to contain seeds therein.

Throughout all this, the plant attachment device to the bottom of a body of water object of the invention represents an improved solution to the systems currently known for the same purpose, solving in a practical and effective manner one of the current problems at the time of repopulating a water bottom, being able to readily choose the design since plants, when moved from one place to another to replant an aquatic area, lack the roots that allow them to anchor themselves to the bottom and are displaced by fish that nibble on them or by the currents themselves making the attachment and repopulation of a sector of an aquatic area almost impossible, in addition to facilitating repopulation and planting immediately after harvesting of seeds and seedlings, thereby avoiding sudden changes in temperature, pH and salinity, saving processing, transportation and energy costs, thus contributing to sustainable aquaculture with the environment, greatly facilitating the design of the aquatic landscape to be created and making the industrial replanting of large water bottom areas viable.

More particularly, the attachment device of the invention traps the stem of aquatic plants by different means and forms according on the type of plant to be affixed to the ground with which to repopulate in an aquatic environment and, through the support to which it is attached, it can penetrate its roots to the bottom substrate, ensuring plant- or seed-retention by preventing it from being dragged by the current.

Thus, summarizing the advantages already described previously throughout the document, the plant attachment system of the invention stands out due to:
- In addition to plants and seeds, it is also suitable for affixing any other object, such as ornamentation, cable, light bulb, etc. to the bottom of a body of water.
- For aquatic areas poor in nutrients, the attachment system can be made with organic waste and minerals that help the growth in the first months of life of the transplanted plants.
- The attachment system that holds the plants or seeds helps their survival as it encapsulates and protects the roots and young, tender stems from being devoured by natural predators.
- Roots begin to develop and take root naturally in the bottom, which prevents their inevitable breakage when being transplanted, which, in turn, guarantees 100% biocompatibility and survival of the root set and therefore of the individual.
- Allows immediate planting: plants or seeds can be planted in the receiving bed immediately after collection, which minimizes or avoids the following:
   - Grow plants in nurseries with the financial expense that entails transportation and maintenance of facilities and equipment.
   - Stress: the plant does not suffer from pH, temperature or food changes.
- The attachment of the retaining device to the support represents significant and substantial differences with respect to other known systems, especially those disclosed by reference documents CN210043001U y KR101990794B.
   - When the support is buried in the bed, the holes are covered with sand or ground from the bottom. By having the ferromagnetic attachment and the retaining devices a magnet at the lower end, it is very easy to affix the plant to the support without the need to dig or clean the holes to join both parts, thus avoiding lifting the mud from the bottom that is loaded with poisonous nitrites fruit of the putrefaction of plant and animal waste.
   - Free arrangement of the plants to consumer taste, since the positions within the griddle are not limited, being able to occupy any required or desired space within the griddle area.

### DESCRIPTION OF THE DRAWINGS

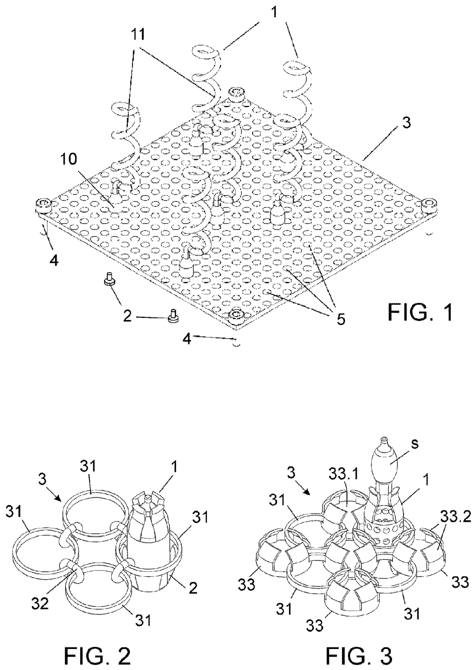

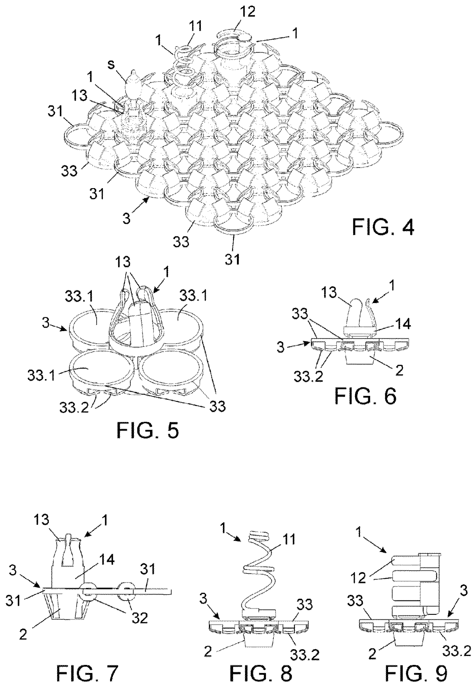

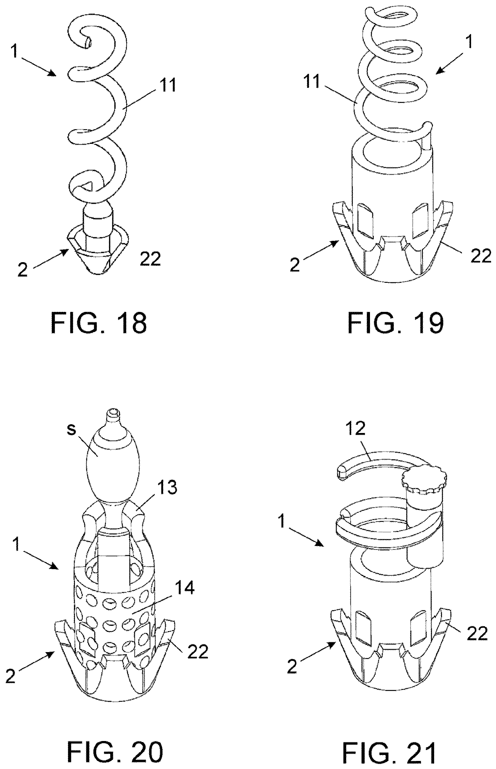

To complement the description that is being made and in order to aid in a better understanding of the features of the invention, it is accompanied by the present specification as an integral part thereof, by a plan in which, with an illustrative and non-limiting nature, the following has been represented:
Figure number 1.- Shows a schematic perspective view of an example of the device for attaching plants to the bottom of a body of water that is the object of the invention, specifically an example with a laminar support made up of a flat body with a perforated surface, with helical-shaped plant retaining devices and with a magnetic connection system of the retaining device to the support assisted with a coupling on the lower part of the support;
Figure number 2.- Shows a schematic perspective view of a portion of another example of the plant attachment device support, in this case made up of rings joined together by washers and incorporating a tubular-shaped retaining device and assisted with an elastic flange attachment system;
Figure number 3.- Shows a schematic perspective view of a portion of another example of the attachment device support, according to the invention, in this case formed of rings joined together by elements to retain sand, and with an example of a tubular-shaped retaining device for seeds with orifice walls;
Figure number 4.- Shows a schematic perspective view of an example of the plant attachment device, in this case with a support formed by rings joined together with elements to retain sand, like the one shown in Figure 3, and including three different types of plant retainers, in the tubular form for seeds, in a helical form and in the form of rotating arms;
Figures number 5 and 6.- Show schematic views, in perspective and side elevation respectively, of a portion of another example of the attachment device support of the invention, in this case formed by connectors joined directly together with fastening claws at the bottom, and including an example of the retaining device inserted in the hole that defines the intersection between said parts;
Figure number 7.- Shows a schematic elevation view of an example of a support of rings joined with washers that includes an example of the retaining device for seeds equipped with an attachment system with elastic flanges;
Figures number 8 and 9.- Show elevation views of respective examples of supports with connectors joined directly together equipped with lower claws, as in the example of Figures 5 and 6, in this case with respective examples of the retaining device in helical shape and with rotating arms;
Figures number 10 and 11.- Show elevation views of an example of a support with parts joined directly together that retain sand and have claws, being arranged with said claws oriented upwards and downwards respectively, and including in both cases an example of the seed retaining device with the integrated clamping system;
Figures number 12 and 13.- Show perspective views of two embodiments of the attachment system of the retaining device of medium force, with lower lugs provided with teeth, with elastic flanges in the shape of a harpoon and with a perforated floor to retain the seed;
Figures number 14, 15, 16 and 17.- Show perspective views of embodiment examples of the attachment system of the retaining device of extreme high force, with harpoon-shaped elastic flanges and with perforated floor to retain the seed;
Figures number 18 and 19.- Show a perspective view of two examples of the retaining device with a helical shape and extreme-high attachment system in the shape of a harpoon;
Figure number 20.- Shows a perspective view of an example of an embodiment of the attachment system of the retaining device of high-extreme force, with elastic flanges in the shape of a harpoon, with upper arms that facilitate smooth entry to retain the seed represented in this case and orifice walls to allow passage of the flow of water current with nutrients.
Figure number 21.- Shows a perspective view of an example of the high-extreme force retaining device as a fixation system, in the form of inverted elastic flanges and with rotating arms;
Figure number 22.- Shows an elevation view of the three examples of extreme-high retaining device shown in Figures 19, 20 and 21, in this case once their attachment systems have been inserted in an example of a modular support formed by parts joined directly together to one another;
Figures number 23 and 24.- Show two examples of retaining device, in helical shape and with rotating arms respectively, for cases in which loose units need to be planted due to space reasons, in this case provided with an attachment system formed by an individual independent part of laminar support;
Figure number 25.- Shows a perspective view of the lower part of an example of the attachment device support with several examples of attachment systems for the retaining devices; and
Figure number 26.- Shows a perspective view of another example of the attachment device support, according to the invention, in this case with part of the through-holes containing seeds and plugged on top and internally with a biodegradable or water-soluble sheet.

### PREFERRED EMBODIMENT OF THE INVENTION

In view of the figures described and in accordance with the numbering adopted, various examples of non-limiting embodiment of the device for attaching plants to the bottom of a body of water of the invention can be observed, which comprises what is described in detail below.

Thus, as seen in Figure 1, the plant attachment device object of the invention essentially comprises a support (3) configured to sit on the water bottom and optionally be buried in the bed, and at least one plant retaining device (1) configured to be arranged around the stem of the plant causing the stem of the plant to be surrounded by the retaining device (1), which comprises a connection system (2) of said retaining device (1) with the support (3) where the support (3) and the connection system of the retaining device (1) comprises one or several layers of a ferromagnetic element in such a way that it is possible to affix the retaining device (1)
anywhere on the surface of the support (3). The magnetic connection of the retaining device (1) with the support (3) is especially interesting when the support is totally or partially covered by the water bottom substrate. In this case the user must simply move the substrate away from the area of the support (3) where they wish to place the retaining device (1) and affix the retaining device (1) with the support (3) and let the substrate return to its natural position. It is not necessary for the user to look for the area of the support (3) where the attachment means of the retaining device (1) are located, a circumstance that is complicated when the support (3) is covered by the water bottom substrate.

In a preferred embodiment, the support (3) comprises multiple through-holes (5), and the plant- or seed-retaining device (1) passes through at least one of the through-holes (5) of the support (3) in such a way that the part of the retaining device (1) that protrudes through the bottom of the support (3) sticks into the water bottom and makes it difficult for the support (3) with the plant- or seed-retaining device or devices (1) to be dragged by the current. In figures 22 and 25, said part of the connection system (2) can be seen protruding from the lower part of the support (3). Furthermore, in this embodiment the roots of plants or seeds contained in the retaining device (1) can pass through the through-holes of the support (3) and access the water bottom substrate.

Referring to Figures 1, 25 and 26, it can be seen how, in one embodiment, the laminar support (3) is a laminar body that defines a flat orifice surface with multiple through-holes (5).

And, taking into account figures 3 to 9, it is observed how, in other embodiments, the laminar support (3) is formed by the union of a plurality of pieces (31, 32, 33) joined in a coplanar manner and that present or define the through-holes (5) of the support (3).

Thus, in an embodiment visible in Figures 2 and 7, the parts that make up the support (3) are rings (31) that are joined together by means of simple connecting elements (32), i.e., consisting of washers.

In another form of embodiment, as shown in Figures 3 and 4, the parts that form the support (3) are rings (31) that are joined together by means of connectors or connection and attachment elements (33), which, at least, have cavities (33.1) to retain the sand from the water bottom and increase the weight of the assembly.

Furthermore, optionally, said connection and attachment elements (33) of the rings (31) that define the support (3) may include claws (33.2) in order to provide attachment of the support (3) to the seabed.

Preferably, the aforementioned connectors or connection and attachment elements (33) are circular parts whose structure comprises, on one side, a larger cavity (33.1) defined by several claws (33.2), while on the opposite side it comprises another smaller cavity (33.1) that also retains the sand at the bottom, allowing said connection and attachment elements (33) to be used both on one side and the opposite, that is, with the claws (33.2) facing upwards (figures 3, 4, 10 and 22) as with the claws facing downwards (figures 5, 6, 8, 9 and 11), or even combining both positions (although this possibility has not been represented).

Likewise, in another embodiment option, the parts that form the support (3) are the connectors or connection and attachment elements (33) that are joined directly together, leaving the through-holes (5) for the insertion of the retaining devices (1) defined by the intersection areas between said connection and attachment parts/elements (33), as shown in the examples in Figures 5 and 6.

In any case, the laminar support (3) is cut out or modular, that is:
trimming by cutting the laminar or modular body by adding a greater or fewer number of parts (31, 32, 33) which form it, to give it the plantar shape and dimension desired or required in each case.

In addition, whether it is formed by a flat body or a set of pieces or rings, the laminar support (3), preferably, constitutes a malleable element that can adapt to the shape of the water bottom where it is going to be installed, either thanks to the malleability of the material itself in the case of consisting of a laminar body, or thanks to the mobile union between the multiple parts (31, 32, 33) that form it, this case being the one that best adapts and absorbs irregularities of the land.

In any case, preferably, the support (3) comprises one or more attachments (4) configured to affix it to the water bottom which, for example, may consist of anchoring legs or suction cups.

Moreover, the connection system (2) of the retaining device (1), as well as the retaining device (1) itself, preferably have a through-hole, to allow the plant or seed roots retained in said device to access the water bottom through the same through-hole (5) of the support (3) where the retaining device (1) has been affixed.

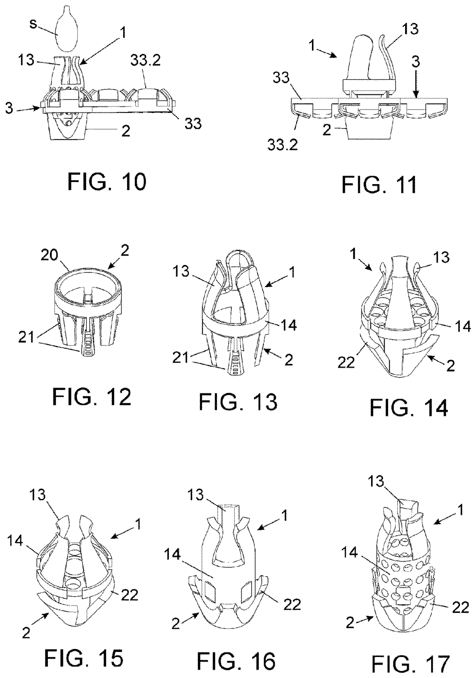

In one embodiment option, the connection system (2) of the retaining device (1) with the support (3) is an attachment system by means of pressure on the top of the support (3), for which, for example, is made up of an annular body (20) from which radial lugs (21) emerge internally, which in turn may have teeth, such that they aid plant attachment in its interior and allow the pressure exerted by magnetism, in the through-holes (5) of the support (3) be gentle with the grip of the plant. In Figures 12 and 13, two examples of said connection system (2) are shown.

In another embodiment option, the connection system (2) of the retaining device (1) with the support (3) comprises a series of elastic elements (22), for example, in the form of inverted flanges or in the shape of a harpoon, which prevent, once inserted into one of the through-holes (5) of the support (3) to separate from it. Examples of this embodiment option can be observed in Figures 14 to 17 and Figures 18 to 21.

In another embodiment, the connection system (2) of the retaining device (1) with the support (3), instead of being fixed from above, is an independent part of the retaining device that, as shown in Figure 1, is placed at the bottom of the support (3) and is fixed to the lower end of the retaining device (1) through the through-hole (5) of the support (3) into which said device is inserted.

Optionally, when the connection system (2) is an independent part that is placed on the lower part of the support (3), said part is a magnet or a ferromagnetic part that is affixed to the bottom of the retaining device (1) which, in turn, has a magnet or a ferromagnetic element at its lower end (10), to magnetically join said part of the connection system (2), as shown in the examples in Figures 23 and 24.

For its part, the retaining device (1) has different configurations, depending on the type of plant for which it is intended or whether it is intended for seeds.

Thus, in an embodiment option, the retaining device (1) comprises a helical shape (11), which is arranged around the stem of the plant making the coils of the helicoid pass repeatedly and radially surrounding it, until the stem of the plant the plant remains in its interior longitudinally. Examples of this option are seen in Figures 8, 18, 19 and 23.

In another embodiment option, the retaining device comprises a plurality of collapsible arms (12) relative to an axis to which they are attached that are independent and that are configured to rotate longitudinally with respect to its axis and radially with respect to the plant, thereby abrading the stems and adapting to their diameter. In Figures 9, 21 and 24 respective examples of said embodiment option can be observed.

And, in another embodiment option, the retaining device (1) comprises a set of converging members (13) which emerge radially above a circular body (14), optionally a cylinder, being in this case especially intended for the retention of seeds, stems and ornaments such as shafts of a light bulb. Figure 3 and Figure 7 show two examples of this option of the device (1). Figures 13 to 17 also show examples of this option of the retaining device (1) for seeds, stems, cables, ornaments, etc.

Optionally, as shown in the example in Figure 14, the retaining device (1) has a floor or orifice base (23) for retaining the seed above the connection system (2) and which does not pass therethrough and into the bottom of the support (3) (Figure 14).

Furthermore, in said embodiment option, the retaining device (1) may comprise a circular tubular body (14) with orifice walls to facilitate passage of water and nutrients, as shown in the example in Figure 20.

Fig. 4 shows the module that is formed by the connection of the components of Figures 2, 3, 7 or another model that is formed by the figures depicted in Figures 5, 6, 8-11, optionally, the plant attachment device of the invention comprises a plurality of modules joined together, each one being composed of a support (3) with retaining devices (1) affixed by respective connection systems (2).

Finally, turning to Figure 26, it is observed how, in one embodiment option, at least a part of the through holes (5) of the laminar support (3), intended to contain seeds(s), stems, cables or ornaments in its interior, there is no distinction of holes, which makes the system more versatile, they are capped with an upper and lower sheet (6), preferably made of biodegradable or water-soluble material.

Having sufficiently described the nature of the present invention, as well as the way of implementing it, it is not considered necessary to make its explanation more extensive for any person skilled in the art to understand its scope and the advantages that derive from it.

## Claims

1. A device for attaching plants to the bottom of a body of water that retains and affixes plants to the substrate at the bottom of an aquatic system, which includes
• a support (3) configured to sit on the water bottom and optionally be buried in the bed, and at least
• a plant retaining device (1) configured to be arranged around the stem of the plant so that the stem of the plant is surrounded by the retaining device (1), which comprises a connection system (2) of said retaining device (1) with support (3)
**characterized in that**
• the support (3) comprises one or more layers of a ferromagnetic element
• the connection system of the retaining device (1) comprises one or more layers of a ferromagnetic element
such that it is possible to affix the retaining device (1) anywhere on the support (3).

2. The device for attaching plants to the bottom of a body of water that retains and fixes the plants to the substrate of the bottom of an aquatic system according to claim 1, **characterized in that**
• the support (3) comprises multiple through-holes (5), and
• the plant- or seed-retaining device (1) passes through at least one of the through openings (5) of the support (3) in such a way that the part of the retaining device (1) that protrudes from the bottom of the support (3) digs into the water bottom and makes it difficult for the support (3) with the one or more plant- or seed-retaining device (1) to be dragged by the current.

3. The device for attaching plants to the bottom of a body of water according to claim 2, **characterized in that** the laminar support (3) is a laminar body that defines a flat surface orifice with multiple through-holes (5), such that the roots of the plants retained by the retaining device (1), can access the lower part of the support (3) and can be affixed to the substrate of the water bottom in a natural way.

4. The device for attaching plants to the bottom of a body of water according to claim 2, **characterized in that** the laminar support (3) is formed by the union of a plurality of parts (31, 32, 33) joined in a coplanar manner and such that they present or define the through-holes (5) of the support (3)

5. The device for attaching plants to the bottom of a body of water according to claim 4, **characterized** because the parts that form the support (3) are rings (31) that are joined together by simple connection elements (32), such as washers.

6. The device for attaching plants to the bottom of a body of water according to claim 4, **characterized in that** the parts that form the support (3) are rings (31) that are joined together by means of connectors or connection and attachment elements (33), which, at least, have cavities (33.1) for retaining the sand from the water bottom and increasing the weight of the assembly.

7. The device for attaching plants to the bottom of a body of water according to claim 6, **characterized in that** the connectors or connection and attachment elements (33) of the rings (31) defining the support (3) include claws (33.2) to provide support for the support (3) to the seabed.

8. The device for attaching plants to the bottom of a body of water according to claim 7, **characterized in that** the connectors or connection and attachment elements (33) are circular parts whose structure comprises, on the one hand, by a larger cavity (33.1) defined by several claws. (33.2), and on the opposite side comprises another smaller cavity (33.1) which also retains the sand at the bottom.

9. The device for attaching plants to the bottom of a body of water according to claim 4, **characterized in that** the parts that form the support (3) are connectors or connection and attachment elements (33) that are joined directly together, leaving the through-holes (5) for the insertion of the retaining devices (1) defined by the intersection areas between said connection and attachment parts/elements (33).

10. The device for attaching plants to the bottom of a body of water according to any of claims 2-9, **characterized in that** the connection system (2) of the retaining device (1), as well as the retaining device (1), have a through-hole, to allow the plant or seed roots retained in said device to access the water bottom through the same through-hole (5) of the support (3) where the retaining device (1) has been affixed.

11. The device for attaching plants to the bottom of a body of water according to any of the previous claims, **characterized in that** the connection system (2) of the retaining device (1) with the support (3) is an attachment system using pressure from the top of the support (3).

12. The device for attaching plants to the bottom of a body of water according to claim 11, **characterized in that** the connection system (2) of the retaining device (1) with the support (3) comprises a series of elastic elements (22).

13. The device or attaching plants to the bottom of a body of water according to any of claims 1 to 10, **characterized in that** the connection system (2) of the retaining device (1) with the support (3) is an independent part of the retaining device that is placed at the bottom of the support (3) and is affixed to the lower end of the retaining device (1) through the same through-hole (5) of the support (3) into which said device is inserted.

14. The device for attaching plants to the bottom of a body of water according to claim 13, **characterized in that** the connection system (2) is a magnet or a ferromagnetic part that is affixed to the bottom of the retaining device (1) which, in turn, has a magnet or a ferromagnetic element at its lower end (10).

15. The device for attaching plants to the bottom of a body of water, according to any of the preceding claims, **characterized in that** the retaining device (1) comprises a helical shape (1.1), which is arranged around the stem of the plant causing the coils of the helicoid to pass repeatedly and radially surrounding it, until the stem of the plant in its interior longitudinally.

16. The device for attaching plants to the bottom of a body of water according to any of claims 1-14, **characterized in that** the retaining device (1) comprises a plurality of collapsible arms (12) that are independent and that are configured to rotate longitudinally with respect to its axis and radially with respect to the plant, thus embracing the stems and adapting to their diameter.

17. The device for attaching plants to the bottom of a body of water according to any of claims 1-14, **characterized in that** the retaining device (1) comprises a set of converging members (13) that emerge radially above a circular body (14).

18. The device for attaching plants to the bottom of a body of water according to claim 17, **characterized** because the retaining device (1) comprises a set of converging members (13) that emerge radially above a circular body (14) consisting of a cylinder, intended for seed retention.

19. The device for attaching plants to the bottom of a body of water according to claim 17, **characterized in that** the retaining device (1) has a floor or orifice base (23) to retain the seed above the connection system (2) and that it does not pass therethrough and into the bottom of the support (3).

20. The device for attaching plants to the bottom of a body of water according to claim 17, **characterized in that** the retaining device (1) comprises a circular tubular body (14) with orifice walls to facilitate passage of water and nutrients.

21. The device for attaching plants to the bottom of a body of water according to any of claims 2-20, **characterized in that** the laminar support (3) is cut out or modular, to give it the plant shape and dimension desired or required in each case.

22. The device for attaching plants to the bottom of a body of water, according to any of claims 2-20, **characterized in that** the laminar support (3) constitutes a malleable element that can adapt to the shape of the water bottom where it is going to be installed.

23. The device for attaching plants to the bottom of a body of water, according to any of the preceding claims, **characterized in that** the support (3) comprises one or more attachments (4) configured to affix it to the water bottom.

24. The device for attaching plants to the bottom of a body of water, according to claim 20, **characterized in that** the attachments (4) are anchoring legs or suction cups.

25. The device for attaching plants to the bottom of a body of water, according to any of the preceding claims, **characterized in that** the elements from which it is made of are of biodegradable material.

26. The device for attaching plants to the bottom of a body of water, according to any of the preceding claims, **characterized in that** it comprises a plurality of modules joined together, each one being composed of a support (3) with retaining devices (1) affixed by respective connection systems (2).

27. The device for attaching plants to the bottom of a body of water, according to any of claims 2-26, **characterized in that** a part of the through-holes (5) of the laminar support (3), intended to contain seed(s) inside, are plugged with an upper sheet (6) and a lower one, made of biodegradable or water-soluble material.
